# EUROPEAN PATENT APPLICATION

(11) **EP 4 272 892 A1**
(43) Date of publication of application: **08.11.2023**
(21) Application number: 22020207.1
(22) Date of filing: 05.05.2022
(51) Int. Cl.: B23K 9/10, B23K 9/12, B23K 9/173, B23K 9/28

(54) **GMAW TORCH COMPRISING TWO CURRENT CONTACT NOZZLES AND CORRESPONDING CURRENT ROUTING**

(71) Applicant: Linde GmbH, 82049 Pullach (DE)
(72) Inventor: Siewert, Erwan, 82049 Pullach (DE); Eichler, Stefan, 82049 Pullach (DE)
(74) Representative: Lu, Jing

(57) **Abstract**

The present invention relates to a welding device (1) for gas metal arc welding, comprising a torch (2), the torch (2) comprising a first current contact point (3) and an opposing second current contact point (4), the torch (2) being configured to pass a wire-shaped filler material (5) along the current contact points (3, 4) so that the wire-shaped filler material (5) electrically contacts the respective current contact point (3, 4), the torch (2) being further configured to generate an arc (6) between the filler material (5) passed past the second current contact point (4) and a workpiece (7), a first and a second lead (8, 9), the first lead (8) being electrically connected to the first current contact point (3), the second lead (9) being electrically connected to the second current contact point (4), the leads (8, 9) being configured to be connected to an electric power supply (10) so that a section (5a) of the filler material (5) extending between the two current contact points (3, 4) is heated by resistance heating when an electrical voltage is applied to the leads (8, 9) by the power supply (10) and generates an electrical current in said section (5a), and a control unit (14) configured to control a heating power corresponding to a product of an electrical heating current between the current contact points (3, 4) and a voltage between the current contact points (3, 4) and/or a power corresponding to a product of an electrical welding current between the second current contact point (4) and the workpiece (7) and an arc voltage between the second current contact point (4) and the workpiece (7).

## Description

The present invention relates to a welding device.

Welding torches for gas metal arc welding (GMAW) use a current contact point to apply an electric current to a wire-shaped filler material (e.g. a suitable metal alloy). The wire is melted by an arc burning between the workpiece to be joined and the wire. Corresponding torches have been known and used for several decades. Special torches allow the welding current or also the welding job (pre-parameterized tasks) to be selected or changed at the torch. Common solutions for this are simple rocker switches on the top of the torch.

Particularly, US4667083 discloses a torch for gas metal arc welding having a housing comprising a first and second end. A wire guide tube is centrally disposed within the housing. An upper electrode contact tip, a lower electrode contact tip, and a dielectric material disposed therebetween are positioned at one end of the wire guide tube.

Furthermore, US4580026 discloses an apparatus and a method for controlling the thermal state of a welding wire which is continuously fed and heated between two electric contact tips having a dielectric gap of a predetermined length therebetween. Heating is generated by passing an electric current between the two contact tips and through the wire. The method comprises the steps of characterizing the welding wire by establishing a preheating current versus wire feed rate relationship, predetermining the average temperature of the outcoming wire at known preheating currents and known wire feed rates, and establishing a series of temperature isotherms based at least in part on the afore-described relationship between heating current and wire feed rate.

Previous torch technology does not allow the deposition rate to be set independently of the energy input into the component. One way of setting the deposition rate independently of the energy input is to preheat the wire by resistance heating. This heating should take place as close as possible to the arc, so that the wire does not cool down again and it is possible to react quickly to changes.

The GMAW welding torches mentioned above do not allow the wire to be preheated close to the arc.

The user (welder) does not have the possibility to change only the amount of wire while maintaining the same energy input. However, this would very often be helpful if, for example, the gap dimension and thus the volume to be filled changes. On the other hand, it would often be helpful if the energy input could be varied at the same deposition rate, e.g. to be able to react to different heat dissipation scenarios.

Previous technical teachings on resistance heating with two current contact points regulate the current between the contact points. This is disadvantageous because the distance between the contact points can change or the voltage drop can vary due to temperature fluctuations.

Based on the above, the problem to be solved by the present invention is to provide a welding device and a corresponding method that are improved with respect to at least one of the above-described difficulties.

The problem is solved by a welding device for gas metal arc welding having the features of claim 1 and by a method having the features of claim 15.

Preferred embodiments of these aspects of the present invention are stated in the sub claims and are described below.

According to claim 1, a welding device is disclosed, comprising
- a torch, the torch comprising a first current contact point and an opposing second current contact point, the torch being configured to guide a wire-shaped filler material along the current contact points so that the wire-shaped filler material electrically contacts the respective current contact point, the torch being further configured to generate an arc between the filler material passed past the second current contact point and a workpiece,
- a first and a second lead, the first lead being connected to the first current contact point, the second lead being connected to the second current contact point, the leads being configured to be connected to an electric power supply so that a section of the filler material extending between the two current contact points is heated by resistance heating when an electrical voltage is applied to the leads by the power supply and generates an electrical current in said section,
- a control unit configured to control a heating power corresponding to a product of an electrical heating current between the current contact points and a voltage between the current contact points and/or configured to control a power corresponding to a product of an electrical welding current between the second current contact point and the workpiece and an arc voltage between the second current contact point and the workpiece.

Preferably, according to a preferred embodiment, a desired heating power is selected, particularly automatically selected, depending on a wire feed speed of the filler material, a wire diameter of the filler material, the material, as well as the distance between the two current contact points.

Furthermore, according to a preferred embodiment, when the heating power is changed, the welding device is configured to adjust at least one welding current source parameter. Particularly, said heating power and the welding current source parameter(s) are adjusted to prevent overheating of the wire-shaped filler material between the two current contact points and a short circuit on the workpiece.

Thus, the device according to the present invention allows one to control (e.g. in a closed or open loop fashion) the respective power / energy conversion, being the product of voltage and current, which reduced the corresponding above-stated disadvantages.

According to a preferred embodiment of the welding device, the first current contact point is formed by a first contact sleeve and the second current contact point is formed by a second contact sleeve, each contact sleeve comprising a through-opening wherein the through-openings are aligned with one another, the contact sleeves being configured to guide the filler material through the through-openings.

Further, in an embodiment, the welding device comprises a guiding sleeve arranged between the current contact points, wherein the guiding sleeve is made of a high-temperature-resistant material (e.g. ceramic). Particularly, the guiding sleeve comprises a tubular shape. Particularly, the guiding sleeve comprises an inner diameter that is larger than the inner diameter of the first and/or second contact sleeve. Particularly, in the framework of the present invention, a high temperature material is a material that withstands a temperature that is at least 20% higher than a melting point of the filler material.

Furthermore, according to an embodiment, the first and/or the second current contact points is/are movable with respect to one another to adjust a distance between the two current contact points. Particularly, in case the first current contact point is moved with respect to the second current contact point, the length of the guiding sleeve is adapted to the changed distance between the two current contact points. Particularly, the guiding sleeve can be a length-adaptable guiding sleeve. Alternatively, the device can comprise guiding sleeves of different lengths for replacement.

According to a further embodiment, guiding elements are provided between the current contact points to center the guiding sleeve

Further, in an embodiment, wherein the torch comprises an inner part and an outer part, wherein the inner part is configured to carry an electrical current for the first current contact point and to provide cooling to the first current contact point, and wherein the outer part is configured to be slid over the inner part and to carry the second current contact point as well as to provide cooling to a shield gas nozzle of the torch. This allows to preheat the wire / filler material close to the arc without increasing the torch dimensions while still allowing the replacement of spare parts in a simple way.

Furthermore, in an embodiment, the inner part is electrically insulated from the outer part. Further, in an embodiment, the outer part comprises two shells which are electrically insulated from each other to prevent generation of an electrical current in the outer shell so as to protect a user holding the torch by the outer shell.

Further, according to an embodiment of the welding device, the welding device is configured to supply a shielding gas to the torch such that at least a portion of the shielding gas flows along the filler material. Particularly, according to an embodiment, the shielding gas is selected from the group comprised of: Argon, a mixture comprising several or all of: Argon, CO₂, O₂, H₂, He, NO, N₂.

Furthermore, according to an embodiment, two gases can be fed during welding, wherein a first gas can act as a shielding gas and preferably has no contact with the filler material between the current contact points and a second gas is applied to the wire between the current contact points and is then being discharged out of the welding torch independently of the first gas.

Further, for supplying the leads, the welding device comprises a first water-cooled cable in an embodiment for supplying electrical current to the first current contact point. Likewise, in an embodiment, the welding device comprises a second and a third water-cooled cable for supplying electrical current (welding current and heating current) to the second current contact point.

According to yet another embodiment, the welding device is configured to clean the filler material before it enters the torch or in the torch.

Further, in an embodiment, the welding device is configured to extract evaporations between the current contact points with the shielding gas.

Furthermore, according to an embodiment, the control unit is configured to control said power relating to the electrical heating current between the two current contact points and/or said power relating to the electrical welding current between the second current contact point and the workpiece depending on at least one of: a diameter of the filler material, the filler material itself, a distance between the two current contact points, a wire feed speed of the filler material.

Further, according to an embodiment of the present invention, the control unit is configured to control said two powers on the basis of the arc voltage between the second current contact point and the workpiece.

According to yet another preferred embodiment, the control unit is configured to adjust the heating power and/or at least one current source parameter of the welding current source based on one or several of: a gap (e.g. in a workpiece or between workpieces), a layer height of a weld seam, a layer width of a weld seam, a temperature of the workpiece or to compensate irregularities in Directed Energy Deposition-Arc (DED-Arc) / Wire Arc Additive Manufacturing (WAAM).

Particularly, the current source parameter can be one of the following parameters: working points of the arc characteristic, voltage correction, pulsed welding current, unpulsed welding current, pulse frequency, base current, peak current, current ramps, control limits, short circuit parameters, etc.

Particularly, the first and the second current contact point together with the section of filler material momentarily extending between these two current contact points form part of a first electrical circuit, while the second current contact point and the workpiece form part of a second electrical circuit. In other words, in an embodiment, the control unit of the welding device is configured to control the respective power of these circuits.

According to an embodiment, a maximum energy consumption between the two current contact points (i.e. in the first circuit) is limited by the melting temperature of the wire material.

Further, according to an embodiment, the control unit is connectable to a current source, particularly to all common current sources and preferably comprises analog and/or digital outputs to pre-set the current of the first circuit (i.e. between the current contact points) as well as the voltage correction of the second circuit. Furthermore, in an embodiment, the control unit comprises a voltage sensor to measure a voltage between the first and the second current contact point (e.g. in said first circuit) and a voltage sensor to measure the arc voltage (e.g. the voltage in the second circuit).

According to yet another embodiment, the control unit comprises a current sensor to measure a current between the first and the second current contact point and a current sensor to measure a current between the second current contact point and the workpiece. According to a preferred embodiment, the voltage in the first circuit is measured directly at the first and the second current contact points via test leads.

Further, according to an embodiment, for compensating axial mechanical play (e.g. due to manufacturing tolerances) of the first contact sleeve, the welding device comprises an elastic component such as a spring or rubber damper or comprise a two part design between the parts that slide into each other.

Furthermore, in an embodiment, the torch comprises an operating element that is operable to adjust an energy input into the workpiece (i.e. the controlled power in the second circuit) and/or wherein the torch comprises an operating element operable to adjust a deposition rate (i.e. heating power in the first circuit) of the filler material. Particularly the respective operating element can be a rocker switch.

Particularly, by increasing the heating current, the arc current can be significantly reduced and thus the energy/heat input into the workpiece.

According to a further embodiment, the control unit of the welding device is configured to allow adjusting the deposition rate and the energy input into the workpiece during welding.

Further, particularly for preventing welding process instabilities, the control unit of the welding device is configured to adjust a manipulated variable in a time-delayed fashion and/or by ramping the manipulated variable.

According to a further embodiment, the powers / energy conversions described herein can further be adjusted based on one, several or all of the following process variables: a gap width, a weld pool temperature, a temperature of the workpiece, a layer width of the workpiece or of a weld seam, a layer height of the workpiece or of a weld seam.

Furthermore, according to an embodiment, the welding device comprises a wire drive for transporting the filler material along the current contact points that is arranged in the vicinity of the torch. Furthermore, in an embodiment the welding device preferably comprises a welding hose connected to the torch, which welding hose comprises a low frictional resistance with respect to the filler material (roll liner).

Furthermore, according to a preferred embodiment of the invention, the welding device is configured to extract evaporations generated between the current contact points using the shielding gas.

Further, according to an embodiment of the invention, the control unit is configured to at least one of:
- access input data from a database stored in the welding device, the database comprising input data indicative of a correlation between the heating power and one or several welding parameters as a function of the filler material, the wire feed speed of the filler material, the diameter of the filler material and a distance between the first and the second current contact point;
- determine a temperature of the filler material based on its thermophysical properties like temperature specific resistance, density and heat capacity;
- access input data indicative of ramps and time offsets for changing the heating power and welding current source parameters.

Particularly, the welding parameter can be selected from the group comprised of: a current source parameter, welding speed, wire feed speed, resulting deposition rate, energy input into the workpiece.

According to yet another preferred embodiment, the welding device, particularly database, is configured to use at least one method of artificial intelligence to improve procedures and parameters and to generate new parameters, e.g. relating to a new material.

Furthermore, according to a preferred embodiment, the welding device is configured to preheat the wire-shaped filler material between the first and the second current contact points, so as to improve ignition of an arc, wherein particularly the welding device is configured to move the wire-shaped filler material back and forth between the first and the second current contact points so that preheating occurs over a defined length of the wire-shaped filler material that is longer than a distance between the first and the second current contact points.

The present invention allows in an advantageous fashion to maintain variability of heating power, welding current and wire feed speed of the wire-shaped filler material during welding, but always coordinated with each other by means of the control unit.

Furthermore, according to an embodiment, two gases can be fed during welding, wherein a first gas can act as a shielding gas and preferably has no contact with the filler material between the current contact points and a second gas is applied to the wire between the current contact points and is then being discharged out of the welding torch independently of the first gas.

According to yet another preferred embodiment, the welding device is configured to center the wire-shaped filler material in a plane orthogonal to the axial direction of the wire-shaped filler material. Such centering can be conducted at the first and/or at the second current contact point. For this, the respective (first and/or second) current contact point can comprise a contact member on one side of the wire-shaped filler material and a pressing element on the other side of the wire-shaped filler material, the pressing element pressing the wire-shaped filler material against the contact member. By way of pressing the wire-shaped filler material against the contact member centering in a first direction is achieved, while centering in a second direction orthogonal to the first direction is preferably achieved by a groove formed in the contact member and/or by a groove formed in the pressing element, wherein the wire-shaped filler material slides in the groove(s).

According to yet another aspect of the present invention, a method of gas metal arc welding is disclosed that preferably uses a welding device according to the present invention, wherein a power corresponding to a product of an electrical current between the current contact points and a voltage drop between the current contact points and/or a power corresponding to a product of an electrical current between the second current contact point and the workpiece and a voltage drop (e.g. arc voltage) between the second current contact point and the workpiece is controlled by a control unit of the welding device upon welding.

The method according to the present invention can be further specified by the features and embodiments described herein with respect to the welding device.

In the following, embodiments of the present invention as well as further features and advantages of the present invention are described with reference to the Figure, wherein
- Fig. 1: shows a cross section of a torch of an embodiment of a welding device according to the present invention;
- Fig. 2: shows an embodiment of the welding device allowing to center the wire-shaped filler material; and
- Fig. 3: shows a schematic diagram of a control procedure that can be carried out by the control unit of an embodiment of a welding device according to the present invention.

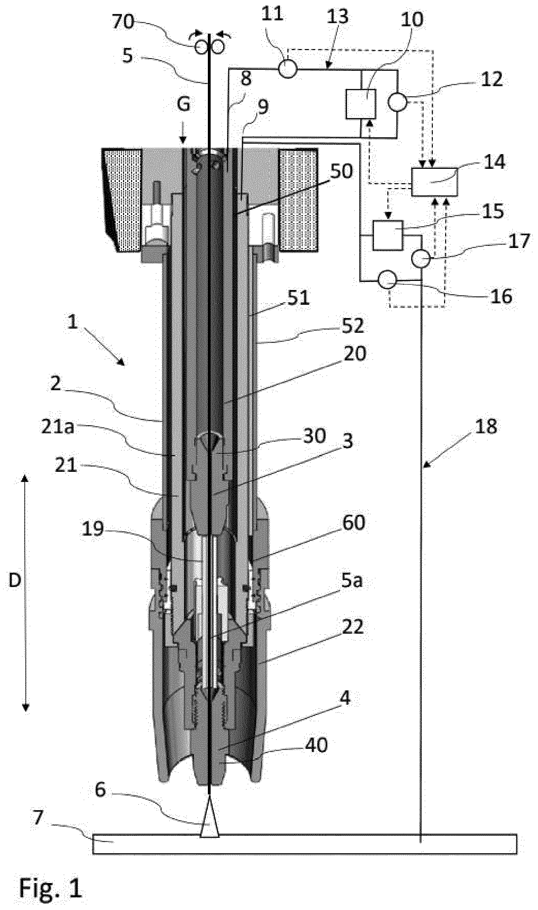

Fig. 1 shows an embodiment of a welding device 1 according to the present invention. According thereto, the welding device 1 comprises a torch 2 with two current contact points 3, 4 and two current leads 8, 9, wherein a section 5a of a wire-shaped filler material 5 is heated between the current contact points 3, 4 by resistance heating.

Particularly, the current contact points 3, 4 are each comprised by a corresponding contact sleeve 30, 40 forming wire guides being arranged concentrically to the wire 5

Furthermore, a guiding sleeve 19 is provided between the contact sleeves 30, 40 and thus between current contact points 3, 4. The guiding sleeve 19 is made out of a high-temperature-resistant material (e.g. ceramic) in the form of a tube, advantageously having a larger inner diameter than the diameters of the contact sleeves 30, 40.

Preferably, the first current contact point 3 can be moved, while the second contact point 4 always remains fixed. Particularly, the length of the high temperature tubular guiding sleeve / insulation 19 is adaptable to the changing distance D.

Further, the torch 2 preferably comprises a tubular inner part 20 electrically connected to lead 8 for passing electric current to the first current point 3. Particularly, the inner part 20 carries electric current for the first current contact point 3 and holds the first contact sleeve 30. Further, the inner part 20 is configured to cool the first contact sleeve 30 / first current contact point 3. Particularly, cooling can be achieved by cooling the tubular inner part 20 at the end of the torch 2, wherein the heat contact sleeve 30 can be dissipated via heat conduction through inner part 20.

Further, the torch 2 preferably comprises an outer part 21 that can be slid over the inner part 20, wherein the inner part 20 and the outer part 21 are separated by an electrical insulation 50. The outer part 21 comprises a current tube 21a for passing electric current to the second contact sleeve 40 / second contact point 4, the current tube 21a being coaxially arranged with respect to said inner part 20. Further, the outer part 21 is configured to provide cooling 60 to the second contact sleeve 40 / second current contact point 4. Particularly, cooling can be provided by having two strips of an insulating material between a top layer 52 and outer part 21, so that there is a coolant (e.g. water) inlet and an outlet. At position 60, a deflection between inlet and outlet can occur.

The current tube 21a is surrounded by an electrically insulating layer 51 that does not extend around the complete periphery of current tube 21a (the insulating layer 51 can be a profile tube), wherein in turn the insulating layer 51 is surrounded by a top layer 52 forming an outer surface of the torch 2 so that a current flowing in the outer part 21, namely in tube 21a, can be kept away from a user operating the torch 2. Axial manufacturing tolerances can be compensated by the current tube 20 of the first current contact point 3 by means of a component such as a spring or rubber damper or by a two-part insulator.

The shielding gas G discharged through the shielding gas nozzle 22 can partially flow around the welding wire 5 and can be used to also discharge evaporations between the current contact points 3, 4.

The wire 5 can be transported by a wire feed mechanism 70 along the current contact points 3, 4 and may be automatically cleaned by the device 1 before entering the torch 2 and/or within the torch 2

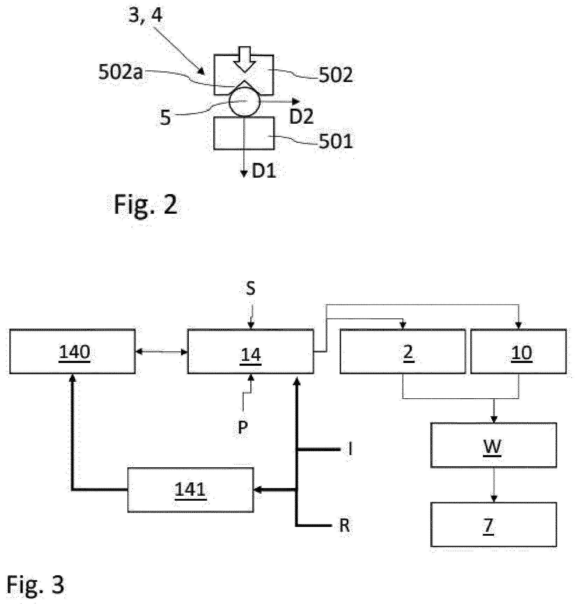

Further, as indicated in Fig. 2, the welding device 1 can center the wire-shaped filler material 5 in a plane orthogonal to the axial direction of the wire-shaped filler material 5. Such centering can be conducted at the first and/or at the second current contact point 3, 4 shown in Fig. 1. For this, the respective (first and/or second) current contact point 3, 4 can comprise a contact member 501 on one side of the wire-shaped filler material 5 and a pressing element 502 on the other side of the wire-shaped filler material 5, wherein the pressing element 502 presses the wire-shaped filler material 5 against the contact member 501. By way of pressing the wire-shaped filler material 5 against the contact member 501 centering in a first direction D1 is achieved, while centering in a second direction D2 orthogonal to the first direction D1 can be conducted by a groove formed in the contact member and/or by a groove 502a formed in the pressing element 502 (as shown in the example of Fig. 2). Particularly, the centering according to Fig. 2 can be applied in all embodiments of the present invention.

Furthermore, the welding device comprises a control unit for controlling the energy conversion (i.e. power) between the two current contact points 3, 4 and the energy conversion between the second current contact point 4 and the workpiece 7, particularly depending on the wire diameter, the wire material, the distance D between the contact points 3, 4 and the wire feed speed (operating points).

Preferably, the control unit 14 controls the energy conversion of the two circuits 13, 18 on the basis of the arc voltage between the second current contact point 4 and the workpiece 7. Particularly, the maximum energy consumption in the first circuit 13 is limited by the melting temperature of the wire material 5. Furthermore, the welding device 1 / control unit 14 comprises voltage sensors 12, 16 to measure the voltage in the first circuit 13 as well as in the second circuit 18 as well as current sensors 11, 17 to measure the electric current in the respective circuit 13, 18.

Furthermore, the welder can adjust the energy input into the workpiece and/or the deposition rate of the filler material 5 (heating power) directly on the welding torch 2 by means of two operating elements (e.g. two rocker switches). Particularly, the control unit 14 allows to vary the deposition rate and energy input during welding.

The present invention advantageously provides a controllable heating power (i.e. a melting power relating to the fille material) independent of an energy input into the workpiece as well as a controllable energy input independent of the melting power.

In contrast, to standard MSG processes, the deposition rate can only be increased if the arc current is also increased. Otherwise, the wire would no longer be melted properly. This means, however, that the energy input into the work piece is also increased. Therefore, melting rate and energy input are coupled. The present invention however allows to set the heating current (heating power) so that the filler material 5 can be preheated and less arc current is required for the same amount of filler material (e.g. wire). As a result, the energy input into the workpiece can be reduced (particularly by about 50%) for the same deposition rate. This means that the deposition rate and energy input can be adjusted independently of each other in a wide range in an advantageous fashion.

Furthermore, the invention offers an easy change of spare parts, despite two circuits 13, 18 and two current contact points 3, 4. Further, advantageously the torch 2 only requires a relatively small installation space. Furthermore, contamination or blocking of the current contact points 3, 4 can be avoided and the wire 5 is not scraped. Further, lower emissions and a better weld pool control can be achieved. Finally, the ignition of the arc 6 with adapted preheating can prevent ignition spattering.

Further, Fig. 3 shows a diagram indicating a possible control process using the control unit 14 according to an embodiment of the present invention. Particularly, the control unit 14 receives target parameters P such as a desired heat input into the workpiece 7 and/or a desired melting rate of the wire-shaped filler material 5 as well as input information S (e.g. the settings of the welding device 1), such as the used filler material, the diameter of the wire-shaped filler material 5 and the heating distance, i.e. distance between said current contact points 3, 4. Based on said parameters P and the given unput information S, the control unit 14 is configured to control the heating power generated by the electric power supply 10 (first circuit) as well as the electric power in the second circuit, i.e. the product of welding current and arc voltage.

For this, particularly, the control unit 14 can access input data from a database 140 stored in the welding device 1, wherein the database 140 can store input data indicative of a correlation between the heating power and welding parameters (for instance parameters such as voltage correction, operating points of the arc characteristic, dynamic control behaviour of the current source, e.g., pulse frequency, base current, etc.) as a function of the filler material, the wire feed speed of the filler material, the diameter of the filler material and a distance between the first and the second current contact point 3, 4.

The control unit 14 can also be configured to determine a temperature of the filler material based on a temperature specific resistance and heat capacity of the welding wire / filler material and may access input data indicative of ramps and time offsets for changing the heating power and welding current source parameters. Particularly, if the heating current is changed in the process, the change in the current source control parameters is preferably time-delayed as a function of the wire feed speed so as to avoid process instabilities. Particularly, a reduction in the heating power is preferably accompanied by an increase in the power of the welding current source. However, the increase in welding power is then preferably ramped up with a time offset of approx. 0.1 seconds to 0.4 seconds. Furthermore, the welding device 1 is configured to use at least one method of artificial intelligence (Al) 141 to improve procedures and parameters of the welding device 1. Particularly, in-situ information I gathered during a Joule heated arc process of a welding procedure W upon which the workpiece 7 is welded, such as the stability of the welding process, particularly stability of the arc 6, the welding current and arc voltage, as well as results R relating to the workpiece 7, such as penetration of a weld seam, temperature of the workpiece 7, shape and gap size of a gap to be welded, can be used as input to an AI algorithm in order to improve procedures and parameters and in order to generate new parameters relating to new materials etc. Particularly, the database 140 can include a relation of the heating power and the arc current, arc voltage, and welding current waveform as a function of the input information I.

## Claims

1. A welding device (1) for gas metal arc welding, comprising
- a torch (2), the torch (2) comprising a first current contact point (3) and an opposing second current contact point (4), the torch (2) being configured to pass a wire-shaped filler material (5) along the current contact points (3, 4) so that the wire-shaped filler material (5) electrically contacts the respective current contact point (3, 4), the torch (2) being further configured to generate an arc (6) between the filler material (5) passed past the second current contact point (4) and a workpiece (7),
- a first and a second lead (8, 9), the first lead (8) being electrically connected to the first current contact point (3), the second lead (9) being electrically connected to the second current contact point (4), the leads (8, 9) being configured to be connected to an electric power supply (10) so that a section (5a) of the filler material (5) extending between the two current contact points (3, 4) is heated by resistance heating when an electrical voltage is applied to the leads (8, 9) by the power supply (10) and generates an electrical current in said section (5a),
- a control unit (14) configured to control a heating power corresponding to a product of an electrical heating current between the current contact points (3, 4) and a voltage between the current contact points (3, 4) and/or a power corresponding to a product of an electrical welding current between the second current contact point (4) and the workpiece (7) and an arc voltage between the second current contact point (4) and the workpiece (7).

2. The welding device according to claim 1, wherein the control unit (14) comprises a voltage sensor (12) to measure a voltage between the first and the second current contact point (3, 4), and/or a voltage sensor (16) to measure the arc voltage, and/or a current sensor (11) to measure said electrical heating current, and/or a current sensor (17) to measure said electrical current.

3. The welding device according to claim 1 or 2, wherein the welding device (1) comprises a current source configured to provide said electrical current, wherein the control unit (14) is integrated into the current source, or wherein the control unit forms a separate device with respect to the current source being configured to control the current source and a heating power source providing the electrical heating current.

4. The welding device according to one of the preceding claims, wherein the control unit (14) is configured to adjust the heating power and/or at least one current source parameter of the welding current source based on one or several of: a gap, a layer height of a weld seam, a layer width of a weld seam, a temperature of the workpiece.

5. The welding device according to one of the preceding claims, wherein the torch (2) comprises an inner part (20) and an outer part (21), wherein the inner part (20) is configured to carry an electrical current for the first current contact point (3) and to provide cooling to the first current contact point (3), and wherein the outer part (21) is configured to be slid over the inner part (20) and to carry the second current contact point (4) as well as to provide cooling to a shield gas nozzle (22) of the torch (2).

6. The welding device according to claim 5, wherein the inner part (20) is electrically insulated from the outer part (21), and wherein the outer part (21) particularly comprises two shells (21a, 52) which are electrically insulated from each other to protect a user holding the torch (2).

7. The welding device according to one of the preceding claims, wherein the welding device (1) is configured to supply a shielding gas (G) to the torch (2) such that at least a portion of the shielding gas (G) flows along the filler material (5), wherein particularly the welding device (1) is configured to extract evaporations generated between the current contact points (3, 4) using the shielding gas (G).

8. The welding device according to one of the preceding claims, wherein the welding device comprises a first water-cooled cable for supplying electrical current to the first current contact point (3), and wherein the welding device comprises a second water-cooled cable for supplying electrical current to the second current contact point (4).

9. The welding device according to one of the preceding claims, wherein the welding device (1) is configured to clean the filler material (5) before it enters the torch (2) or within the torch (2).

10. The welding device according one of the preceding claims, wherein the control unit (14) is configured to at least one of: access input data from a database (140) stored in the welding device (1), the database (140) comprising input data indicative of a correlation between the heating power and welding parameters as a function of the filler material (5), the wire feed speed of the filler material (5), the diameter of the filler material (5) and a distance between the first and the second current contact point (3, 4); determine a temperature of the filler material (5) based on a temperature specific resistance and heat capacity of the filler material (5); to access input data indicative of ramps and time offsets for changing the heating power and welding current source parameters.

11. The welding device according to one of the preceding claims, wherein the control unit (14) is configured to control said heating power relating to the electrical current between the two current contact points (3, 4) and/or said power relating to the electrical current between the second current contact point (4) and the workpiece (7) depending on at least one of: a diameter of the filler material (5), the filler material (5), a distance (D) between the two current contact points (3, 4), a wire feed speed of the filler material (5).

12. The welding device according to one of the preceding claims, wherein the control unit (14) is configured to control an electrical welding current based on the arc voltage, while the electrical heating current is held constant, particularly so as to compensate an irregularity of the welding process such as a change in a distance between the torch and the workpiece.

13. The welding device according to one of the preceding claims, wherein for compensating axial mechanical play of the first current sleeve (3), the welding device (1) comprises an elastic component, or the guide sleeve (19) is made out of at least two pieces slidable into each other.

14. The welding device according to one of the preceding claims, wherein the torch (2) comprises an operating element that is operable to adjust an energy input into the workpiece and/or wherein the torch (2) comprises an operating element operable to adjust a deposition rate of the filler material (5) upon welding.

15. A method of gas metal arc welding using a welding device (1) according to one of the preceding claims, wherein a heating power corresponding to a product of an electrical heating current between the current contact points (3, 4) and a voltage between the current contact points (3, 4) and/or a power corresponding to a product of an electrical current between the second current contact point (4) and the workpiece (7) and an arc voltage between the second current contact point (4) and the workpiece (7) is controlled by a control unit (14) of the welding device (1) upon welding.
